# EUROPEAN PATENT SPECIFICATION

(11) **EP 1 755 311 B1**
(45) Date of publication and mention of the grant of the patent: **08.07.2009**
(21) Application number: 06722247.1
(22) Date of filing: 03.04.2006
(51) Int. Cl.: H04L 29/06

(54) **A METHOD FOR IMPLEMENTING THE ACCESS DOMAIN SECURITY OF AN IP MULTIMEDIA SUBSYSTEM**
VERFAHREN ZUR IMPLEMENTIERUNG DER ZUGRIFFSBEREICHSSICHERHEIT EINES IP-MULTIMEDIA-SUBSYSTEMS
PROCEDE D'IMPLEMENTATION DE LA SECURITE DE DOMAINE D'ACCES D'UN SOUS-SYSTEME MULTIMEDIA IP

(30) Priority: 27.05.2005 CN 200510071538
(43) Date of publication of application: 21.02.2007
(73) Proprietor: Huawei Technologies Co., Ltd., Longgang District Shenzhen Guangdong 518129 (CN)
(72) Inventor: WEN, Kai, Huawei Administration Bld., Guangdong 518129 (CN); GU, Jiongjiong, Huawei Administration Bld., Guangdong 518129 (CN)
(74) Representative: Pellkofer, Dieter
(86) International application number: PCT/CN2006/000595
(87) International publication number: WO 2006/125359

(56) References cited:
- EP-A1- 1 414 212
- WO-A2-20/04084464
- CN-A- 1 416 241
- CN-A- 1 553 656
- US-A1- 2004 225 878
- 3GPP SA WG3: "Universal Mobile Telecommunications System (UMTS); Security aspects of early IMS (3GPP TR 33.978 version 6.0.1 Release 6); ETSI TR 133 978" ETSI STANDARDS, EUROPEAN TELECOMMUNICATIONS STANDARDS INSTITUTE, SOPHIA-ANTIPO, FR, vol. 3-SA3, no. V601, April 2005 (2005-04), pages 1-22, XP014027200 ISSN: 0000-0001
- 3GPP SA WG3: "Digital cellular telecommunications system (Phase 2+); Universal Mobile Telecommunications System (UMTS); 3G security; Access security for IP-based services (3GPP TS 33.203 version 6.6.0 Release 6); ETSI TS 133 203" ETSI STANDARDS, EUROPEAN TELECOMMUNICATIONS STANDARDS INSTITUTE, SOPHIA-ANTIPO, FR, vol. 3-SA3, no. V660, March 2005 (2005-03), pages 1-45, XP014028219 ISSN: 0000-0001
- SIEMENS: "Comments on use of 401 Unauthorized and 399 Warning in Early IMS" 3GPP WORKING PAPER, [Online] 26 April 2005 (2005-04-26), - 29 April 2005 (2005-04-29) pages 1-4, XP002428145 Retrieved from the Internet: URL:http://www.3gpp.org/ftp/tsg_sa/WG3_Sec urity/TSGS3_38_Geneva/Docs/S3-050237.zip> [retrieved on 2007-04-04]

## Description

### Field of the Technology

The present invention relates to security techniques in communication fields, and in particular, to a method for implementing access domain security of IP multimedia subsystem (IMS).

### Background of the Invention

As a session control layer of a fixed network and/or a mobile network, an IMS has always been the focus of discussion in the industry. The 3^{rd} generation mobile communication system (3G) and TISPAN standard have provided specifications for the IMS in various aspects, such as network architectures, interfaces, and protocols, where security mechanisms for the IMS network is a subject matter to which the 3G and the TISPAN have been given much consideration.

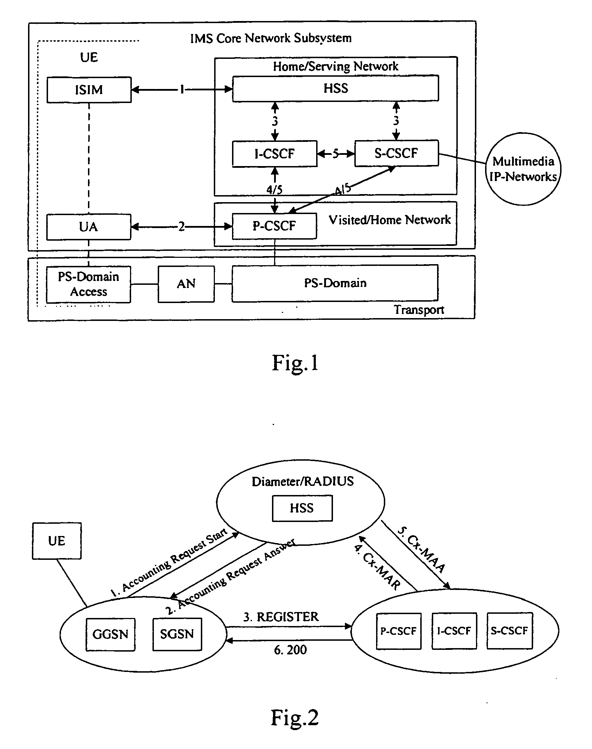

Figure 1 shows a security model of the existing IMS network, which configures Call Session Control Function (CSCF) entities for controlling and routing calls and sessions. Depending on the different implemented functions, the CSCF entities are further divided into a Proxy CSCF (P-CSCF) entity, a Serving CSCF (S-CSCF) entity, and an Interrogating CSCF (I-CSCF) entity. Here, the P-CSCF is responsible for the access of User Equipment (UE), and all the UEs access the IMS network via the P-CSCF; the S-CSCF implements core functions for the IMS network, such as session control and routing etc.; and the I-CSCF is for selecting S-CSCFs, implementing interworking between different operators or networks of different areas, or performing network topology hiding etc., e.g., it is adopted as the only exit/entrance between different operators.

In order to ensure security of an IMS network on all side, the IMS network may be divided into access domain and network domain, and security specifications are defined for these two domains, respectively. In the 3GPP protocol, IMS access domain security includes user authentication and/or communication security. Here, the user authentication means that the IMS network identifies the authenticity of UEs requesting an access, and authorizes the appropriate UEs to access the IMS network; and the communication security refers to setting up a security channel between two entities to guarantee signaling transmission security between those two entities. Interfaces 1 and 2 shown in Figure 1 are two external interfaces in the access domain of the IMS network, which are both connected with UEs. Here, Interface 1 is responsible for performing UE authentication, and the mutual authentication between a UE and the IMS network is implemented through Interface 1; Interface 2 is responsible for guaranteeing the communication security between a UE and a P-CSCF.

In practical applications, there may be various ways of performing user authentication over Interface 1. Likewise, there may be various types of security channels for guaranteeing the communication security over Interface 2. For example, an IP Multimedia Subsystem Authentication and Key Agreement (IMS AKA) is a user authentication mechanism defined in prior art, which is described in detail in TS33.203 and RFC3310, and no further description is herein given. However, although the TS33.203 protocol has put forward the IMS AKA authentication mode, this user authentication mechanism can only be employed to safeguard the access security of the IMS network in the case that the UE supports the TS33.203 protocol. That is, the IMS AKA authentication mode is not applicable to the UE which does not conform to the TS33.203 protocol, e.g., the UE with a SIM card.

In order to provide IMS services to more UEs, at the same time ensure the access security of the IMS network, the Early IMS authentication mode is defined in TR33.978, of which the specific implementation is shown in Figure 2.

The difference between an IMS AKA authentication mode and an Early IMS authentication mode lies in that a security header "Authorization" is carried in the register request message sent from a UE in the IMS AKA authentication mode, while the Early IMS authentication mode does not require a security header to be carried by the register request message of a UE. If the IMS network is only demanded to support the above two user authentication mechanisms, the appropriate user authentication mechanism employed by the UE can be determined by detecting whether the register request contains a security header, and thereby the IMS access domain security can be provided. However, once the IMS network is desired to support more user authentication mechanisms, the prior art approach would be inadequate, i.e., this approach is insufficient in terms of compatibility and expandability.

Furthermore, in accordance with this approach in prior art, the user authentication mechanism selected by the UE is identified by the IMS network, and the IMS access domain security is implemented by the user authentication mechanism. Therefore, it is impossible for the IMS network to determine a user authentication mechanism for certain UE based on the security need of the network itself, i.e., this approach is inflexible in implementing the IMS access domain security. In addition, when carrying out access domain security, no method has been provided in prior art to make it possible for an IMS network to flexibly configure type of a security channel between a UE and a P-CSCF.

### Summary of the Invention

The present invention is to provide a method for implementing access domain security of an Internet Protocol Multimedia Subsystem (IMS), which includes:
pre-configuring at least one access domain security mechanism on a Proxy Call Session Control Function (P-CSCF) in an IMS network;
after receiving a request message from a User Equipment (UE), determining, by the P-CSCF in the IMS network, an access network based on a network interface or an IP address domain of the received request message, selecting by the P-CSCF in the IMS network an access domain security mechanism for the UE according to the determined access network and a configuration of the P-CSCF in the IMS network, and performing by the IMS network security control on an access of the UE according to the selected access domain security mechanism.

When the access domain security mechanism includes a user authentication mechanism, the method further includes: the P-CSCF) configuring user authentication mechanisms; and
the P-CSCF, after receiving a request message from the UE, deciding whether the request message carries a user authentication mechanism claimed by the UE;
if it doesn't, the P-CSCF determining the access network of the UE according to network interface or IP address domain, and adding the user authentication mechanism configured for this access network by the P-CSCF itself to the request message and sending the message to a Serving Call Session Control Function (S-CSCF), and the S-CSCF acquiring the user authentication mechanism, adding the mechanism into the multimedia authentication request and sending the request to a Home Subscriber Server (HSS);
if it does, deciding whether the user authentication mechanism claimed by the UE exists in the user authentication mechanisms configured by the P-CSCF, if the claimed mechanism exists, the P-CSCF directly forwarding the received request message;
otherwise, the P-CSCF sending the request message to the S-CSCF after modifying the user authentication mechanism carried in the request message according to the configuration on the P-CSCF itself, and the S-CSCF acquiring the user authentication mechanism, adding the mechanism into the multimedia authentication request, and sending the request to the HSS.

When the access domain security mechanism includes a user authentication mechanism, the user authentication mechanism includes: Digest MD5 authentication mode, IMS AKA authentication mode, or Early IMS authentication mode.

When the access domain security mechanism includes a type of a security channel, pre-configuring at least one access domain security mechanism on the P-SCF in the IMS network includes: setting types of security channels on the P-CSCF;
selecting an access domain security mechanism for the UE includes: after receiving the request message from a UE and deciding the access network of the UE, the P-CSCF searching for types of security channels configured for the access network by the P-CSCF itself, and selecting one from the configured types.

The method further includes: the HSS configuring types of security channels according to user identifiers; and
after receiving a multimedia authentication request, the HSS finding the type of security channel corresponding to the user identifier carried in the request, and sending the type of security channel via a multimedia authentication response to the S-CSCF; the S-CSCF forwarding the type of security channel configured by the HSS to the P-CSCF, and the P-CSCF determining type of security channel set up between the P-CSCF and the UE.

The method further includes: the P-CSCF reporting the type of security channel to the S-CSCF after the security channel is set up between the UE and the P-CSCF.

When the access domain security mechanism includes a type of a security channel, the type of security channel includes: IPSec, Transport Layer Security (TLS), or no need to set up a security channel.

The user identifier includes: a private user identifier, a public user identifier, or a user type.

The access network includes: a mobile access network, a fixed access network, an Asymmetric Digital Subscriber Line (ADSL) network, a Local Area Network (LAN), a Hybrid Fiber-Coaxial (HFC) network, or a Wireless Local Area Network (WLAN).

As can be seen from the above solution, in accordance with the method of this invention for implementing IMS access domain security, one or multiple access domain security mechanisms, which include user authentication mechanisms and/or types of security channels, are configured beforehand on a Home Subscriber Server (HSS) and/or a P-CSCF, and the HSS, the P-CSCF, or a UE will make a selection from the configured access domain security mechanisms based on practical situations, thereby making the implementation of IMS access domain security more flexible.

On one hand, the method of this invention is compatible with various existing access domain security mechanisms, and has high flexibility.

For example, in order to support the access domain security mechanism defined by TS33.203, "IMS AKA" could be configured on an HSS as the user authentication mechanism, and "IPSec" configured on a P-CSCF as the type of security channel.

For another example, if it is desired to allow a UE to access an IMS network by an Early IMS authentication mode, configure the user authentication mechanism of the UE as "Early IMS" on the HSS, so that the IMS network could make authentication for the register request sent from that UE according to corresponding relation between an IP address and a user identifier of the UE. As it is impossible to pass off the IP address when adopting the Early IMS authentication mode, the communication security of the UE is guaranteed by the IP networking of bottom layer, so the type of security channel configured on the P-CSCF can be "no need to set up a security channel".

On the other hand, the method of this invention is able to support various access domain security mechanisms that may be developed in the future, i.e., this method is of high versatility and expandability, and able to meet the security demands of various types of UE for accessing an IMS network.

For example, an operator may fulfill the following extended configuration in accordance with its own need, that is to configure the user authentication mechanism as "Digest MD5", and configure the type of security channel as "no need to set up a security channel", and implement the IMS access domain security based on the above configuration.

### Brief Description of the Drawings

Figure 1 shows a security model of an IMS network in a conventional invention;
Figure 2 is a schematic diagram illustrating the implementation of the Early IMS authentication mode in the conventional invention;
Figure 3 is a schematic diagram illustrating an IMS network simultaneously supporting a plurality of access domain security mechanisms in accordance with a first embodiment of the present invention;
Figure 4 shows the procedure for implementing the Digest MD5 authentication mode in the first embodiment of the present invention;
Figure 5 shows the procedure for implementing the IMS access domain security in accordance with the user authentication mechanism determined by the HSS in a second embodiment of the present invention;
Figure 6 shows the procedure for UE to determine the user authentication mechanism according to the choices provided by the HSS in a third embodiment of the present invention;
Figure 7 is the flowchart for implementing the IMS access domain security in accordance with the access domain security mechanism configured by the P-CSCF in a fourth embodiment of the present invention;
Figure 8 is the flowchart for implementing the access domain security when an HSS and a P-CSCF set access domain security mechanisms simultaneously.

### Embodiments of the Invention

This invention is hereinafter described in detail with reference to the accompanying drawings and exemplary embodiments so that the object, solution, and merits thereof could be made more apparent.

In order to improve the expandability and flexibility for the implementation of access domain security in an IMS network, and satisfy various security demands from different application environments, one or a plurality of access domain security mechanisms are configured in advance over IMS network devices as HSSs and/or P-CSCFs in this embodiment. Then, in association with an access domain security mechanism claimed in the register request sent from a UE, the access domain security mechanism applied to this UE is eventually determined, and the access security control is conducted in accordance with the determined access domain security mechanism.

Specifically, the method includes: configuring on an HSS at least one user authentication mechanism and/or at least one type of security channel corresponding to a user identifier; or configuring on a P-CSCF at least one user authentication mechanism and/or at least one type of security channel corresponding to an access network.

The above access domain security mechanism may be configured only on the HSS directed towards a user identifier, or configured only on the P-CSCF directed towards an access network, or the former two configurations are employed in combination, i.e., configure on the HSS and the P-CSCF simultaneously.

When an access domain security mechanism is configured on an HSS directed towards a user identifier, the user identifier may include a private user identifier, a public user identifier, or a user type. Here, the private user identifier refers to the information identifier stored on devices such as an ISIM card, the public user identifier refers to a phone number, and the user type indicates a fixed user or a mobile user, etc.

In the case of configuring IMS access domain security mechanisms on a P-CSCF, a UE can access the IMS network via the P-CSCF through different access networks. The P-CSCF provides a plurality of network interfaces to the outside, each interface corresponds to a distinct access network, such as a mobile access network UMTS/GPRS, or a fixed network, or an Asymmetric Digital Subscriber Line (ADSL) network, or a Local Area Network (LAN), or a Hybrid Fiber-Coaxial (HFC) network, or a Wireless Local Area Network (WLAN). Thus, an operator may configure access domain security mechanisms on the P-CSCF corresponding to access networks, i.e., the operator may configure specific access domain security mechanism directed towards each network interface. Then, the UE accessing the IMS network via a network interface is required to use the corresponding access domain security mechanism to accomplish the access safely. Apart from differentiating access networks by network interfaces, it is also possible to differentiate access networks of users by IP address domains, i.e., divide IP addresses into different domains and correspond different IP address domains to different access networks, respectively. In this way, the operator may configure different access domain security mechanisms for different IP address domains.

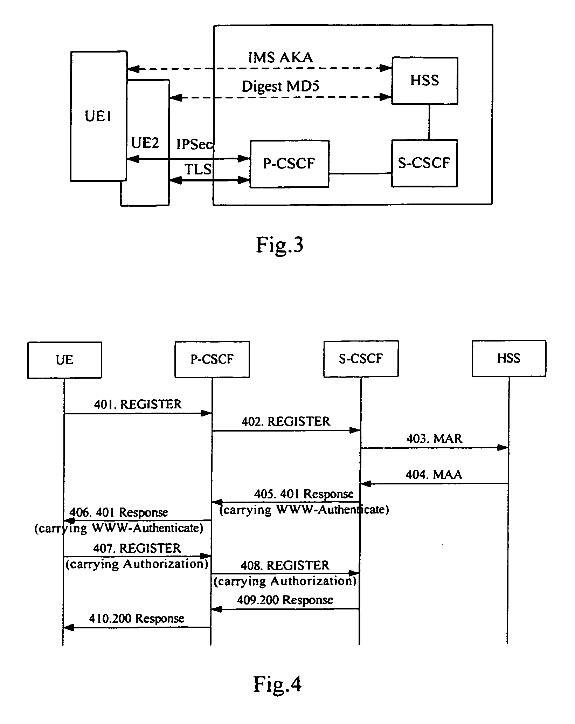

In accordance with this invention, the IMS network is able to support multiple access domain security mechanisms simultaneously. As shown in Figure 3, the dotted lines represent user authentication mechanisms, including IMS AKA, Early IMS, Digest MD5, and etc.; the solid lines represent types of security channels, including IPSec, Transport Layer Security (TLS), etc. Both the Digest MD5 authentication mode and the Early IMS authentication mode allow SIP terminals, which are not supported by IMS AKA, to access an IMS network.

Figure 4 shows the process of performing Digest MD5 authentication for a register request from a UE by an S-CSCF based on the configurations on an HSS, and the specific steps include:
Step 401: A UE sends a REGISTER request message to a P-CSCF, and the message does not carry an Authorization header.
Step 402: The P-CSCF forwards the REGISTER request message to an S-CSCF.
Step 403: The S-CSCF sends a Multimedia Authentication Request (MAR) message to an HSS, which carries a user identifier of the UE acquired from the REGISTER request message.
Step 404: After receiving the MAR message, the HSS looks for configuration data of the UE in itself based on the user identifier, and decides which user authentication mechanism should be chosen for this UE.

If the MAR message carries a user authentication mechanism, the HSS will check the self-stored user authentication mechanisms corresponding to the user identifier, and decide whether the user authentication mechanism carried in the MAR message exists in the self-stored mechanisms, if it exists, generate authentication vector for this user authentication mechanism.

If the MAR message sent from the S-CSCF carries no user authentication mechanism, the HSS may select one according to the default configuration, e.g., select a user authentication mechanism with higher priority, generate authentication vector for the selected user authentication mechanism and return the authentication vector to the S-CSCF, so that the S-CSCF could make authentication for the UE which has sent the REGISTER request message.

In this embodiment, the Digest MD5 authentication mode is assumed to be selected for the UE by the HSS. With username-value, realm-value, and user password (passwd) in the configuration data, the HSS calculates subscriber authentication vector H(A1) in accordance with the formula H(A1) = H(unq(username-value)":"unq(realm-value)":"passwd) defined in the RFC2617 protocol, and returns a MAA message carrying the H(A1) to the S-CSCF.

In this step, the realm-value can be configured in the S-CSCF, and the S-CSCF will, based on the user identifier in the user REGISTER request, transfer the realm-value related to the user identifier to the HSS. Or the HSS itself has configured the realm-value corresponding to that user identifier. Thus, it is not needed to transfer the realm-value via an interface.
Step 405: The S-CSCF preserves the H(A1) carried in the MAA message, generates a WWW-Authenticate header, and issues the generated WWW-Authenticate header to the P-CSCF by a 401 response message.
Step 406: After receiving the 401 response message from the S-CSCF, the P-CSCF transmits the 401 response message transparently to the UE.
Step 407: The UE acquires the WWW-Authenticate header from the 401 response, calculates "request-digest" in association with its own key, and fills the calculated "request-digest" into the response parameter of the Authorization header as authentication response. After that, the UE re-initiates a REGISTER request message, and returns the above authentication response to the P-CSCF.
Steps 408∼409: The P-CSCF sends the REGISTER request message to the S-CSCF. The S-CSCF, based on the authentication response carried in the REGISTER request message, figures out the "request-digest" in association with the self-stored H(A1), and compares the value calculated by itself with the content recorded in the response parameter of the authentication response. If the two values are identical, the S-CSCF determines that the registration authentication for the UE succeeds, then a 200 response message will be returned to the P-CSCF, and step 410 is executed; otherwise the authentication fails.
Step 410: The P-CSCF forwards the 200 response message to the UE, and the authentication procedure is over.

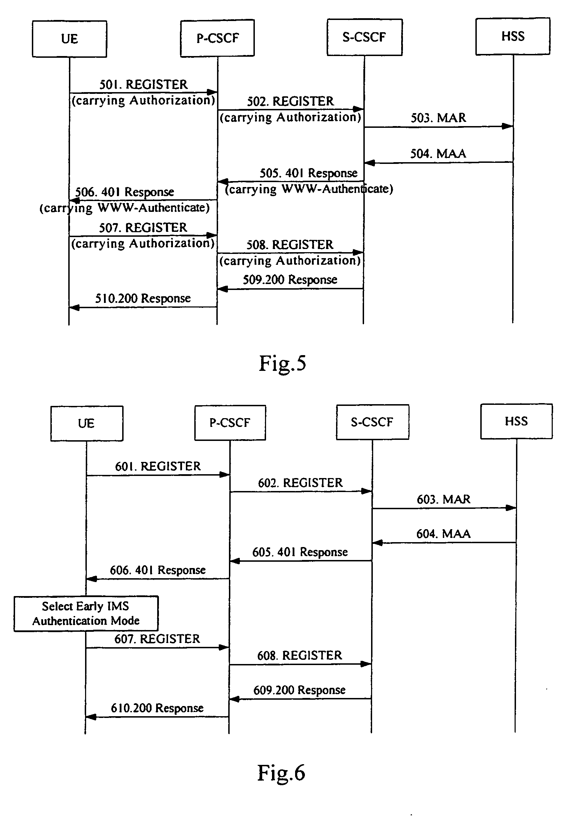

Figure 5 shows the process, as a second embodiment of this invention, that the UE claims a user authentication mechanism supported by itself, and the HSS determines the final user authentication mechanism used for this UE. The specific steps of this process include:
Steps 501∼502: A UE, with a user identifier of ID1, sends a REGISTER request message to an S-CSCF via a P-CSCF, and this REGISTER request message carries an Authorization header in claiming a user authentication mechanism to the IMS network.

For example, the UE claims that the desired mechanism be IMS AKA by an Authorization header as follows:
Authorization: Digest username = "user1_private@home1.net", realm = "registrar.home1.net", nonce = "", uri = "sip:registrar.home1.net", response = "", algorithm = AKAv1-MD5.

Step 503: The S-CSCF sends a MAR message to a HSS via a Cx interface, and the user authentication mechanism claimed by the UE is recorded in the information element of "Authentication Scheme" of this MAR message.
Step 504: The HSS acquires the user identifier ID1 of the UE from the MAR message, and inquires about configuration data in itself directed towards the user identifier ID1. Suppose that the user authentication mechanisms configured for the user identifier ID1 are Early IMS and IMS AKA, since the UE-claimed user authentication mechanism IMS AKA is recorded in the MAR message, the HSS prefers to choose IMS AKA as the user authentication mechanism for this UE, and returns the selected user authentication mechanism and corresponding authentication vector to the S-CSCF by a MAA response message.

In this step, if the user authentication mechanism indicated in the received MAR message does not exist in the list of authentication mechanisms pre-configured for the UE, the HSS, as the decision-making point for user authentication mechanisms, will select a default authentication mechanism from the list configured in itself as the user authentication mechanism for the UE. Alternatively, in this case, the HSS will return a failure response to refuse an authentication for the REGISTER request message from this UE.

Steps 505~510 are the same as Steps 405~410 in Figure 4, and no further description is herein given.

Figure 6 shows the process in which, as a third embodiment of this invention, the HSS provides user authentication mechanisms to a UE for selection, and the UE ultimately chooses an appropriate authentication mechanism. The specific steps of this process include:
Steps 601~602: The UE, with a user identifier of ID2, sends a REGISTER request message to a S-CSCF via a P-CSCF, and this message carries no Authorization header.
Step 603: The S-CSCF sends a MAR message to an HSS via a Cx interface to request authentication vector. Here, the MAR message carries no information element of "Authentication Scheme".
Step 604: After acquiring the user identifier ID2 from the MAR message, the HSS inquires about the pre-configured corresponding relation between the user identifier and the user authentication mechanisms. Suppose that the user authentication mechanisms corresponding to the user identifier ID2 are Early IMS and Digest MD5, then the HSS will return the user authentication mechanisms of Early IMS and Digest MD5 as well as corresponding authentication vector to the S-CSCF through an MAA response.

In this step, since the REGISTER request message received by the S-CSCF carries no Authorization header, the MAR message sent from the S-CSCF carries no information element named "Authentication Scheme" as well. Meanwhile, as the HSS has no sufficient basis to pick out one user authentication mechanism from a plurality of them, the HSS will return an MAA response carrying various user authentication mechanisms and corresponding authentication vector to the S-CSCF.
Steps 605~606: After receiving the MAA response, the S-CSCF generates WWW-Authenticate headers based on the acquired authentication vector, respectively, and sends the headers to the UE by a 401 response message.

In this step, the S-CSCF indicates multiple user authentication mechanisms supported by the IMS network in the issued 401 response message which are offered to the UE for selection. For example, the 401 response message issued by the S-CSCF to the UE may carry two WWW-Authenticate headers, each of which corresponds to a user authentication mechanism.
Step 607: The UE acquires the WWW-Authenticate headers from the 401 response message, thereby learning the two authentication mechanisms supported by the IMS network, which are Early IMS and Digest MD5. Then, the UE selects an authentication mechanism for which the UE itself can give stronger support from those two mechanisms, e.g., selects the Early IMS authentication mode, and re-initiates a REGISTER request message. Here, the REGISTER request message carries a source IP address of the UE.
Steps 608~610: The S-CSCF queries, according to the user identifier in the REGISTER request message, whether the UE has registered or not. If not, acquire authentication IP address corresponding to the user identifier from the HSS by a MAR/MAA procedure over a Cx interface, and compare the source IP address carried in the REGISTER request message with the authentication IP address acquired from the HSS. If the above two addresses are identical, the registration authentication for the UE is passed.

The authentication IP address is sent by a GGSN to the HSS via an Accounting-Request START message in a PDP activation procedure, and no further description is herein given.

After the registration process is completed, the S-CSCF will save the corresponding relation between the user identifier and the authentication IP address. Anytime when receiving a non-register request from the UE, the S-CSCF will compare the source IP address carried in this non-register request with the authentication IP address saved in the S-CSCF, and reject the non-register request if these two addresses are different.

If there is only one authentication mechanism configured in the HSS for a certain user identifier, the HSS will take this authentication mechanism as the user authentication mechanism used for this UE, no matter what authentication mechanism is indicated by the received MAR message.

Similarly, types of security channels may be configured on the HSS corresponding to a user identifier. Thus, in the procedures shown in Figures 5 and 6, the S-CSCF can also acquire the types of security channels configured for certain UEs when the S-CSCF and the HSS interact with each other in a MAR/MAA procedure, and send the acquired type of security channel to the P-CSCF via a 401 response. For example, the S-CSCF may add a private extension header called security-channel into a 401 response message, for telling the type of security channel to the P-CSCF. After receiving the 401 response message from the S-CSCF, the P-CSCF, as the establishing point of security channel, determines, by negotiating with the UE and with reference to the type of security channel carried in the 401 response message, the type of security channel to be established eventually.

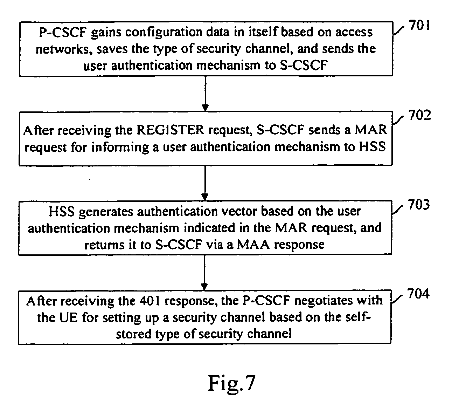

Figure 7 shows the process in which, as a fourth embodiment of this invention, the operator configures user authentication mechanisms and types of security channels corresponding to access networks in advance on a P-CSCF, and implements access domain security by referring to the above configuration. The specific steps of this process include:
Step 701: After receiving a REGISTER request message from a UE, the P-CSCF determines the access network based on the network interface or the IP address domain of the message, and acquires the access domain security mechanism corresponding to the access network from the configuration data in the P-CSCF itself. Then, the P-CSCF saves the type of security channel of this UE, and sends the user authentication mechanism to an S-CSCF by a REGISTER request message.

In this step, if the REGISTER request message sent from the UE carries no Authorization header, the P-CSCF will add an Authorization header into the REGISTER request message sent by itself, embed the user authentication mechanism in the header, and send the message to the S-CSCF.

If the REGISTER request message sent from the UE carries an Authorization header, the P-CSCF will read out the "algorithm" parameter in this header, and compare the parameter with locally configured user authentication mechanism. When the two user authentication mechanisms are not the same, the P-CSCF will modify the "algorithm" parameter into the user authentication mechanism locally configured, and send the modified REGISTER request message to the S-CSCF.
Step 702: After receiving the REGISTER request, the S-CSCF sends a MAR request to an HSS which carries an information element of "Authentication Scheme" to inform the HSS of a user authentication mechanism.

In this step, the information element of "Authentication Scheme" in the MAR request carries the user authentication mechanism recorded in the REGISTER request message. This user authentication mechanism may be claimed by the UE, or filled by the P-CSCF, and the S-CSCF will not distinguish whether the user authentication mechanism carried in the Authorization header is claimed by the UE or filled by the P-CSCF when the REGISTER request message had passed the P-CSCF. That is, the S-CSCF will indicate the user authentication mechanism carried in the REGISTER request message received by itself directly to the HSS via a MAR request.
Step 703: If no access domain security mechanism corresponding to the user identifier is configured on the HSS, the HSS will generate authentication vector based on the user authentication mechanism indicated in the MAR request, and return the authentication vector to the S-CSCF via a MAA response. The subsequent step is the same as Step 405 in Figure 4, and no further description is herein given.

If the HSS does not support the user authentication mechanism prescribed in the MAR request, the HSS will inform it to the S-CSCF via the MAA message, then the S-CSCF will return a 4XX response to the UE, e.g., a 420 Bad Extension etc.
Step 704: After receiving the 401 response, the P-CSCF negotiates with the UE for setting up a security channel based on the self-stored type of security channel.

In this step, the P-CSCF sends a 401 response to the UE, and adds the selected type of security channel into the Security-Server header of the 401 response. If the security channel between the P-CSCF and the UE is successfully established, the P-CSCF will receive and handle subsequent requests on the established security channel.

After the security channel between the UE and the P-CSCF is established, the P-CSCF informs the S-CSCF of the type of security channel established between itself and the UE by a SIP message header carried in the REGISTER request, e.g., a private SIP header named Security-Channel.

In the subsequent process, the S-CSCF is likely to use the above information of type of security channel, e.g., the S-CSCF may decide whether the UE has set up a security channel, and perform Digest MD5 authentication for each request message from UEs that have not set up security channels, or provide limited IMS services for UEs that have not set up security channels. In addition, after learning the type of security channel, the S-CSCF may use it as subscriber information, e.g., carry out uniform processing for UEs with the same type of security channel rather than implement specific processing towards certain UE.

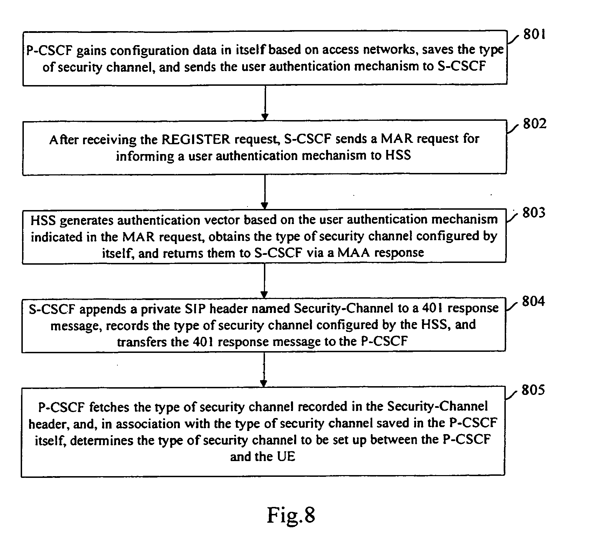

When operators configure access domain security mechanisms on an HSS and a P-CSCF simultaneously, the handling procedure will be shown in Figure 8:
Step 801: After receiving a REGISTER request message, the P-CSCF learns the user authentication mechanism and the type of security channel supported by the UE initiating the REGISTER request, according to the access network sending the message. The P-CSCF records the type of security channel set for the UE by itself, and sends the user authentication mechanism to an S-CSCF through an Authorization header of the REGISTER request message.
Step 802: The S-CSCF transfers the user authentication mechanism recorded in the Authorization header to an HSS through a MAR message.
Step 803: Based on the user identifier of the UE, the HSS acquires the user authentication mechanism and the type of security channel configured for this UE by itself from the local configuration data, determines the user authentication mechanism that will be eventually used for the UE in association with the user authentication mechanism carried in the MAR message, generates authentication vector and returns it to the S-CSCF.

Meanwhile, the HSS will transfer the type of security channel configured by itself to the S-CSCF through the MAA response message, as well.
Step 804: The S-CSCF constructs a WWW-Authenticate header based on the received authentication vector, appends a private SIP header named Security-Channel to a 401 response message, which is for recording the type of security channel configured by the HSS, and transfers the 401 response message to the P-CSCF.
Step 805: After receiving the 401 response message from the S-CSCF, the P-CSCF fetches the type of security channel recorded in the Security-Channel header, and, in association with the type of security channel saved in the P-CSCF itself, determines the type of security channel to be set up between the P-CSCF and the UE.

Various cases may derive from the above procedures in practical applications. For example, if an operator only configures user authentication mechanisms corresponding to user identifiers on an HSS, and only configures types of security channels corresponding to access networks on a P-CSCF, the P-CSCF will not be involved in selecting and determining the user authentication mechanism; likewise, when the type of security channel is determined, the HSS will not be involved, either.

Configurations for user authentication mechanisms and types of security channels are independent from each other. For example, when an operator configures types of security channels on an HSS and/or a P-CSCF, user authentication mechanisms may or may not be configured on the HSS and/or the P-CSCF.

In some access scenarios, an operator guarantees communication security between a UE and a P-CSCF through the bottom-layer IP networking. Then, when confirming that security guarantee has been provided to a certain access network, for example, a Virtual Private Network (VPN), the operator will not additionally set up a security channel between the P-CSCF and the UE of this access network.

In the case of no security channel existing between the UE and the P-CSCF while the bottom-layer IP networking is unable to guarantee the communication security between them, authentication may be carried out in the process of registration or session setup, in order to prevent users from being cheated. For example, in the process of session setup, when receiving a session request initiated from a UE, the S-CSCF will firstly perform Digest MD5 authentication for this UE. If the authentication succeeds, the S-CSCF will continue to perform a call setup for the UE; otherwise, the session request will be rejected. Furthermore, the S-CSCF may conduct Digest MD5 authentication for any request message initiated by the UE. Or, after a user accomplishes a successful registration, the P-CSCF saves the corresponding relation between the IP address and the user identifier of the UE. When receiving an optional service request initiated by this UE in the subsequent process, the P-CSCF will firstly check the corresponding relation between the user identifier carried in this service request and the source IP address, and decide whether it is identical with the pre-stored corresponding relation. If yes, the service request will be permitted, otherwise it will be rejected. The above check procedure can be defined as a type of a security channel and configured on the P-CSCF so as to be used in guaranteeing the access domain security. That is, the type of security channel can be extended as needed and is not limited to IPSec and/or TLS.

In addition, the implementation of user authentication is associated in a certain way with that of communication security. If the IMS AKA authentication mode is adopted for a UE, both the P-CSCF and the UE will acquire an IK/CK in the authentication process, where the IK/CK is a cryptographic key for setting up a security channel. If the Digest MD5 authentication mode is used for a UE, as no key for setting up a security channel is generated in this authentication process, other approaches have to be taken up for building the security channel. For example, configure on the P-CSCF a digital certificate issued by a third-party authority, and send this digital certificate to the UE. In this way, the UE and the P-CSCF could establish a security channel by using this digital certificate.

As can be seen from the above exemplary embodiments, in accordance with the method of this invention for implementing IMS access domain security, one or a plurality of access domain security mechanisms are configured in advance on an HSS and/or a P-CSCF, and the HSS, the P-CSCF, or a UE can make a selection from the configured security mechanisms based on practical situations. Thus, the method makes the implementation of the IMS access domain security more flexible, provides better versatility and expandability, and satisfies the security demand for various UEs in accessing an IMS network.

## Claims

1. A method for implementing access domain security of an Internet Protocol Multimedia Subsystem, IMS, **characterized in that** the method comprises:
pre-configuring at least one access domain security mechanism on a Proxy Call Session Control Function, P-CSCF, of an IMS network;
after receiving a request message from a User Equipment, UE, determining, by the P-CSCF of the IMS network, an access network based on a network interface or an IP address domain of the received request message, selecting, by the P-CSCF of the IMS network, an access domain security mechanism for the UE according to the determined access network and a configuration of the P-CSCF of the IMS network, and performing, by the IMS network, security control on an access of the UE according to the selected access domain security mechanism.

2. The method according to claim 1, wherein the access domain security mechanism comprises a user authentication mechanism, the method further comprises: the P-CSCF configuring user authentication mechanisms; and
the P-CSCF, after receiving a request message from the UE, deciding whether the request message carries a user authentication mechanism claimed by the UE (701);
if it doesn't, the P-CSCF determining the access network of said UE according to network interface or IP address domain, and adding the user authentication mechanism configured for this access network by the P-CSCF itself to said request message and sending the message to a Serving Call Session Control Function, S-CSCF, and the S-CSCF acquiring said user authentication mechanism, adding the mechanism into the multimedia authentication request and sending the request to a Home Subscriber Server, HSS (701);
if it does, deciding whether the user authentication mechanism claimed by the UE exists in the user authentication mechanisms configured by the P-CSCF, if the claimed mechanism exists, the P-CSCF directly forwarding the received request message (701);
otherwise, the P-CSCF sending the request message to the S-CSCF after modifying the user authentication mechanism carried in the request message according to the configuration on the P-CSCF itself, and the S-CSCF acquiring said user authentication mechanism, adding the mechanism into the multimedia authentication request, and sending the request to the HSS (701).

3. The method according to claim 1, wherein the access domain security mechanism comprises a user authentication mechanism, and said user authentication mechanism comprises: Digest MD5 authentication mode, IMS AKA authentication mode, or Early IMS authentication mode.

4. The method according to claim 1, wherein the access domain security mechanism comprises a type of a security channel and pre-configuring at least one access domain security mechanism on the P-CSCF of the IMS network comprises: setting types of security channels on the P-CSCF; and
selecting an access domain security mechanism for the UE comprises: after receiving the request message from a UE and deciding the access network of said UE, the P-CSCF searching for types of security channels configured for the access network by the P-CSCF itself, and selecting one from the configured types.

5. The method according to claim 4, further comprising: a Home Subscriber Server, HSS, configuring types of security channels according to user identifiers; and
after receiving a multimedia authentication request, the HSS finding the type of security channel corresponding to the user identifier carried in the request, and sending said type of security channel via a multimedia authentication response to a Serving Call Session Control Function, S-CSCF; the S-CSCF forwarding the type of security channel configured by the HSS to the P-CSCF, and the P-CSCF determining type of security channel set up between the P-CSCF and the UE.

6. The method according to claim 4 or 5, further comprising: the P-CSCF reporting the type of security channel to the S-CSCF after the security channel is set up between the UE and said P-CSCF.

7. The method according to claim 1, wherein the access domain security mechanism comprises a type of a security channel, and said type of security channel comprises: IPSec, Transport Layer Security, TLS, or no need to set up a security channel.

8. The method according to claim 5, wherein said user identifier comprises: a private user identifier, a public user identifier, or a user type.

9. The method according to claim 4, wherein said access network comprises: a mobile access network, a fixed access network, an Asymmetric Digital Subscriber Line, ADSL, network, a Local Area Network, LAN, a Hybrid Fiber-Coaxial, HFC, network, or a Wireless Local Area Network, WLAN.

## Patentansprüche

1. Verfahren zum Realisieren einer Zugriffsbereichssicherheit eines Internetprotokoll-Multimedia-Subsystems, IMS,
**dadurch gekennzeichnet, dass**
das Verfahren umfasst, dass
mindestens ein Zugriffsbereichssicherheitsmechanismus an einer Proxy-Anrufsitzungssteuerfunktion, P-CSCF, eines IMS-Netzes vorkonfiguriert wird;
nach dem Empfangen einer Anforderungsnachricht von einem Benutzergerät, UE, durch die P-CSCF des IMS-Netzes auf der Grundlage einer Netzschnittstelle oder eines IP-Adressenbereichs der empfangenen Anforderungsnachricht ein Zugriffsnetz ermittelt wird, durch die P-CSCF des IMS-Netzes ein Zugriffsbereichssicherheitsmechanismus für das UE gemäß dem ermittelten Zugriffsnetz und einer Konfiguration der P-CSCF des IMS-Netzes ausgewählt wird und durch das IMS-Netz bei einem Zugriff des UE gemäß dem ausgewählten Zugriffsbereichssicherheitsmechanismus eine Sicherheitssteuerung durchgeführt wird.

2. Verfahren nach Anspruch 1,
wobei der Zugriffsbereichssicherheitsmechanismus einen Benutzerauthentifizierungsmechanismus umfasst, wobei das Verfahren ferner umfasst, dass: die P-CSCF Benutzerauthentifizierungsmechanismen konfiguriert; und
die P-CSCF nach dem Empfangen einer Anforderungsnachricht von dem UE bestimmt, ob die Anforderungsnachricht einen durch das UE geforderten Benutzerauthentifizierungsmechanismus trägt (701); wenn dies nicht der Fall ist, die P-CSCF das Zugriffsnetz des UE gemäß der Netzschnittstelle oder dem IP-Adressenbereich ermittelt und den für dieses Zugriffsnetz durch die P-CSCF selbst konfigurierten Benutzerauthentifizierungsmechanismus zu der Anforderungsnachricht hinzufügt und die Nachricht an eine Serving-Anrufsitzungssteuerfunktion, S-CSCF, sendet, und die S-CSCF den Benutzerauthentifizierungsmechanismus erhält, den Mechanismus in die Multimediaauthentifizierungsanforderung einfügt und die Anforderung an einen Heimteilnehmer-Server, HSS, sendet (701); wenn dies der Fall ist, bestimmt wird, ob der durch das UE geforderte Benutzerauthentifizierungsmechanismus in den durch die P-CSCF konfigurierten Benutzerauthentifizierungsmechanismen existiert, und wenn der geforderte Mechanismus existiert, die P-CSCF die empfangene Anforderungsnachricht direkt weiterleitet (701); die P-CSCF andernfalls die Anforderungsnachricht nach dem Modifizieren des in der Anforderungsnachricht getragenen Benutzerauthentifizierungsmechanismus gemäß der Konfiguration an der P-CSCF selbst an die S-CSCF sendet und die S-CSCF den Benutzerauthentifizierungsmechanismus erhält, den Mechanismus in die Multimediaauthentifizierungsanforderung einfügt und die Anforderung an den HSS sendet (701).

3. Verfahren nach Anspruch 1,
wobei der Zugriffsbereichssicherheitsmechanismus einen Benutzerauthentifizierungsmechanismus umfasst und der Benutzerauthentifizerungsmechanismus umfasst: einen Digest-MD5-Authentifizierungsmodus, einen IMS-AKA-Authentifizierungsmodus oder einen Early-IMS-Authentifizierungsmodus.

4. Verfahren nach Anspruch 1,
wobei der Zugriffsbereichssicherheitsmechanismus einen Typ eines Sicherheitskanals umfasst und das Vorkonfigurieren mindestens eines Zugriffsbereichssicherheitsmechanismus an der P-CSCF des IMS-Netzes umfasst, dass: Typen von Sicherheitskanälen an der P-CSCF festgelegt werden; und
das Auswählen eines Zugriffsbereichssicherheitsmechanismus für das UE umfasst, dass: die P-CSCF nach dem Empfangen der Anforderungsnachricht von einem UE und dem Bestimmen des Zugriffsnetzes des UE nach für das Zugriffsnetz durch die P-CSCF selbst konfigurierten Typen von Sicherheitskanälen sucht und einen aus den konfigurierten Typen auswählt.

5. Verfahren nach Anspruch 4,
das ferner umfasst, dass: ein Heimteilnehmer-Server, HSS, gemäß Benutzeridentifikatoren Typen von Sicherheitskanälen konfiguriert; und
der HSS nach dem Empfangen einer Multimediaauthentifizierungsanforderung den Typ von Sicherheitskanal findet, der dem in der Anforderung getragenen Benutzeridentifikator entspricht, und den Typ von Sicherheitskanal über eine Multimediaauthentifizierungsantwort an eine Serving-Anrufsitzungssteuerfunktion, S-CSCF, sendet; die S-CSCF den durch den HSS konfigurierten Typ von Sicherheitskanal an die P-CSCF weiterleitet, und die P-CSCF den Typ von zwischen der P-CSCF und dem UE aufgebauten Sicherheitskanal ermittelt.

6. Verfahren nach Anspruch 4 oder 5,
das ferner umfasst, dass: die P-CSCF der S-CSCF den Typ von Sicherheitskanal nach dem Aufbau des Sicherheitskanals zwischen dem UE und der P-CSCF berichtet.

7. Verfahren nach Anspruch 1,
wobei der Zugriffsbereichssicherheitsmechanismus einen Typ von Sicherheitskanal umfasst und der Typ von Sicherheitskanal umfasst: eine IPSec, eine Transportschichtsicherheit, TLS, oder es nicht erforderlich ist, einen Sicherheitskanal aufzubauen.

8. Verfahren nach Anspruch 5,
wobei der Benutzeridentifikator umfasst: einen privaten Benutzeridentifikator, einen öffentlichen Benutzeridentifikator oder einen Benutzertyp.

9. Verfahren nach Anspruch 4,
wobei das Zugriffsnetz umfasst: ein Mobilzugriffsnetz, ein Festzugriffsnetz, ein Netz einer asymmetrischen digitalen Teilnehmerleitung, ADSL-Netz, ein lokales Netz, LAN, ein Hybrid-Faser-Koaxial-Netz, HFC-Netz, oder ein drahtloses lokales Netz, WLAN.

## Revendications

1. Procédé de mise en oeuvre de la sécurité d'un domaine d'accès d'un Sous-système Multimédia à Protocole Internet, ou IMS, **caractérisé en ce que** le procédé comprend :
la configuration à l'avance d'au moins un mécanisme de sécurité du domaine d'accès dans une Fonction de Contrôle de Session d'Appel de Mandataire, ou P-CSCF, d'un réseau IMS ;
après réception d'un message de demande en provenance d'un Équipement Utilisateur, ou UE, la détermination par la fonction P-CSCF du réseau IMS, d'un réseau d'accès sur la base d'une interface réseau ou d'un domaine d'adresses IP du message de demande reçu, la sélection, par la fonction P-CSCF du réseau IMS, d'un mécanisme de sécurité du domaine d'accès pour l'UE en conformité avec le réseau d'accès déterminé et avec une configuration de la fonction P-CSCF du réseau IMS, et l'exécution par le réseau IMS d'un contrôle de sécurité sur un accès de l'UE en conformité avec le mécanisme de sécurité du domaine d'accès sélectionné.

2. Procédé selon la revendication 1, dans lequel le mécanisme de sécurité du domaine d'accès comprend un mécanisme d'authentification d'utilisateur, le procédé comprenant en outre la configuration par la fonction P-CSCF de mécanismes d'authentification d'utilisateur ; et
le fait que la fonction P-CSCF, après réception d'un message de demande de l'UE, décide si le message de demande transporte un mécanisme d'authentification d'utilisateur revendiqué par l'UE (701) ;
si cela n'est pas le cas, la détermination par la fonction P-CSCF du réseau d'accès dudit UE en conformité avec l'interface réseau ou avec le domaine d'adresses IP, et l'ajout par celle-ci du mécanisme d'authentification d'utilisateur configuré pour ce réseau d'accès par la fonction P-CSCF elle-même audit message de demande et l'envoi du message à une Fonction de Contrôle de Session d'Appel de Service, ou S-CSCF, et l'acquisition par la fonction S-CSCF dudit mécanisme d'authentification d'utilisateur, l'ajout par celle-ci du mécanisme à la demande d'authentification multimédia et l'envoi de la demande à un Serveur d'Abonné de Départ, ou HSS (701) ;
si cela est le cas, le fait de décider si le mécanisme d'authentification d'utilisateur revendiqué par l'UE existe dans les mécanismes d'authentification d'utilisateur configurés par la fonction P-CSCF, si le mécanisme revendiqué existe, la réexpédition directe par la fonction P-CSCF du message de demande reçu (701) ;
dans le cas contraire, l'envoi par la fonction P-CSCF du message de demande à la fonction S-CSCF après modification du mécanisme d'authentification d'utilisateur transporté dans le message de demande en conformité avec la configuration de la fonction P-CSCF elle-même et l'acquisition par la fonction S-CSCF dudit mécanisme d'authentification d'utilisateur, l'ajout par celle-ci du mécanisme à la demande d'authentification multimédia et l'envoi de la demande au serveur HSS (701).

3. Procédé selon la revendication 1, dans lequel le mécanisme de sécurité du domaine d'accès comprend un mécanisme d'authentification d'utilisateur et ledit mécanisme d'authentification d'utilisateur comprend : un mode d'authentification "Digest MD5", un mode d'authentification "IMS AKA" ou un mode d'authentification "Early IMS".

4. Procédé selon la revendication 1, dans lequel le mécanisme de sécurité du domaine d'accès comprend un type de canal de sécurité, et dans lequel la configuration à l'avance d'au moins un mécanisme de sécurité du domaine d'accès dans la fonction P-CSCF du réseau IMS comprend : le réglage de types de canaux de sécurité dans la fonction P-CSCF ; et
la sélection d'un mécanisme de sécurité du domaine d' accès pour l'UE comprend : après réception du message de demande en provenance d'un UE et le choix du réseau d'accès dudit UE, la recherche par la fonction P-CSCF de types de canaux de sécurité configurés pour le réseau d'accès par la fonction P-CSCF elle-même, et la sélection de l'un d'entre eux parmi les types configurés.

5. Procédé selon la revendication 4, comprenant en outre :
un Serveur d'Abonné de Départ, HSS, configurant des types de canaux de sécurité en conformité avec des identifiants d'utilisateurs ; et
après réception d'une demande d'authentification multimédia, l'obtention par le serveur HSS du type de canal de sécurité correspondant à l'identifiant d'utilisateur transporté dans la requête, et l'envoi dudit type de canal de sécurité par l'intermédiaire d'une réponse d'authentification multimédia à une Fonction de Contrôle de Session d'Appel de Service, ou S-CSCF ; la réexpédition par la fonction S-CSCF du type de canal de sécurité configuré par le serveur HSS à la fonction P-CSCF, et la détermination par la fonction P-CSCF du type de canal de sécurité établi entre la fonction P-CSCF et l'UE.

6. Procédé selon la revendication 4 ou 5, comprenant en outre l'indication par la fonction P-CSCF du type de canal de sécurité à la fonction S-CSCF après que le canal de sécurité a été établi entre l'UE et ladite fonction P-CSCF.

7. Procédé selon la revendication 1, dans lequel le mécanisme de sécurité du domaine d'accès comprend un type de canal de sécurité et ledit type de canal de sécurité comprend : le système IPSec, le système de Sécurité de la Couche de Transport, ou TLS, ou l'absence de besoin d'établir un canal de sécurité.

8. Procédé selon la revendication 5, dans lequel ledit identifiant d'utilisateur comprend : un identifiant d'utilisateur privé, un identifiant d'utilisateur public ou un type d'utilisateur.

9. Procédé selon la revendication 4, dans lequel ledit réseau d'accès comprend : un réseau d'accès mobile, un réseau d'accès fixe, une ligne d'Abonné Numérique à Débit Asymétrique, ou ADSL, un réseau Local, ou LAN, un réseau Hybride Fibre-Coaxial, ou HFC, ou un réseau Local sans Fil, ou WLAN.
